(19) Europäisches Patentamt / European Patent Office / Office européen des brevets

(11) **EP 3 347 401 B2**

(12) **NEW EUROPEAN PATENT SPECIFICATION**
After opposition procedure

(45) Date of publication and mention
of the opposition decision:
**26.02.2025 Bulletin 2025/09**

(45) Mention of the grant of the patent:
**23.02.2022 Bulletin 2022/08**

(21) Application number: **16771012.8**

(22) Date of filing: **12.09.2016**

(51) International Patent Classification (IPC):
**C08G 63/181** (2006.01)    **C08G 63/80** (2006.01)
**C08G 63/88** (2006.01)

(52) Cooperative Patent Classification (CPC):
**C08G 63/80; C08G 63/181**

(86) International application number:
**PCT/NL2016/050629**

(87) International publication number:
**WO 2017/043974 (16.03.2017 Gazette 2017/11)**

(54) **PROCESS FOR ENHANCING THE MOLECULAR WEIGHT OF A POLYESTER BY SOLID STATE POLYMERIZATION**

VERFAHREN ZUR ERHÖHUNG DES MOLEKULARGEWICHTS EINES POLYESTERS DURCH FESTKÖRPERPOLYMERISATION

PROCÉDÉ D'AMÉLIORATION DU POIDS MOLÉCULAIRE D'UN POLYESTER PAR POLYMÉRISATION À L'ÉTAT SOLIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2015 NL 2015425**

(43) Date of publication of application:
**18.07.2018 Bulletin 2018/29**

(73) Proprietor: **Furanix Technologies B.V.**
**1014 BV Amsterdam (NL)**

(72) Inventor: **VAN BERKEL, Jesper Gabriël**
**1014 BV Amsterdam (NL)**

(74) Representative: **EP&C**
**P.O. Box 3241**
**2280 GE Rijswijk (NL)**

(56) References cited:
**WO-A1-2010/077133    WO-A1-2013/062408**
**WO-A2-2014/054940**

**Description**

The present invention relates to a process for enhancing the molecular weight of a polyester by solid state polymerization. In particular, it relates to a process for enhancing the molecular weight of a semi-crystalline polyester comprising ethylene-2,5-furandicarboxylate units.

2,5-Furandicarboxylic acid (FDCA) is a diacid that can be produced from natural sources such as carbohydrates. Routes for its preparation using air oxidation of 2,5-disubstituted furans such as 5-hydroxymethylfurfural or ethers thereof with catalysts comprising Co and Mn have been disclosed in e.g. WO2010/132740, WO2011/043660 and WO2011/043661.

US 2551731 describes the preparation of polyesters and polyester-amides by reacting glycols with dicarboxylic acids of which at least one contains a heterocyclic ring, such as 2,5-FDCA. Under melt polymerization conditions, using sodium- and magnesium methoxide as a catalyst, FDCA or FDCA dimethyl ester and 1.6 equivalents of ethylene glycol were reacted in an esterification step or transesterification step, respectively, at ambient pressure between 160 and 220 C, after which a polycondensation was carried out between 190 and 220 °C under a few mm Hg pressure. The product had a reported melting point of 205-210 °C and readily yielded filaments from the melt.

In US 2009/0124763 polyesters are described, having a 2,5-furandicarboxylate moiety within the polymer backbone and having a degree of polymerization of 185 or more and 600 or less. These polymers are made in a three step process involving the esterification of the 2,5-FDCA or the transesterification of the diester thereof with a diol, and a second step involving polycondensation, followed by solid state polymerization as third step.

The first step is carried out at ambient pressure at a temperature within a range of 150 to 180 °C, whereas the polycondensation step is carried out under vacuum at a temperature within a range of 180 to 230 °C. The product is then purified by dissolving the same in hexafluoroisopropanol, re-precipitation and drying, followed by the third step, a solid state polymerization at a temperature in the range of from 140 to 180 °C. For the preparation of poly(ethylene furandicarboxylate) the first two steps took over 11 hours. The polymer is reported to have a melting point of 170°C. In examples it is shown that despite the step of solid state polymerization, the molecular weight of e.g. poly(ethylene-2,5-furandicarboxylate) is still rather low.

A process is described in WO 2013/062408, wherein the dimethyl ester of FDCA is transesterified with ethylene glycol, or bis(2-hydroxyethyl)-2,5-furandicarboxylate is used as starting material. The transesterification product or this starting material is then subjected to polycondensation and after a drying/crystallization step the polycondensate is subjected to solid state polymerization to enhance the molecular weight of the polycondensate. In an example the polycondensate was ground and sieved and the fraction with particle size 0.6 - 1.4 mm was crystallized overnight at 110°C overnight. This fraction was subjected to solid state polymerization which took two days. According to an example the solid state polymerization was conducted in a tumble drier by increasing the temperature from 145 to 200°C in 72 hours. Care was taken that polymer particles did not stick together. In another experiment the solid state polymerization was carried out at a constant temperature of 210°C under a flow of nitrogen. The solid state polymerization procedure still took two days. In WO 2010/077133 a process for preparing furandicarboxylate-containing polyesters is described wherein the diester of FDCA is transesterified with a diol, and the ester composition thus obtained is subjected to polycondensation. The polycondensate may then be subjected to solid state polymerization. Suggested temperatures include those above 200 °C. In an example the solid state polymerization is conducted for 60 hours. Although the molecular weight of the polyester obtained is reasonably high, the duration of the solid state polymerization is considered too long. From these two applications no teaching can be derived how the molecular weight can be increased at a higher rate.

In WO 2013/120989 a continuous process for the preparation of poly(ethylene furandicarboxylate) is described wherein FDCA or a diester thereof is mixed with ethylene glycol at elevated temperature to give a paste or a homogeneous solution, the paste or solution is converted to an esterification product of FDCA and ethylene glycol, the esterification product is polycondensed under reduced pressure, wherein the polycondensation is performed in two stages. The polycondensation product can be subjected, if desired, to a solid state polymerization at a temperature in the range of 160 to 210 °C. According to an example the dimethyl ester of FDCA is reacted with ethylene glycol in a molar ratio of 1:1.7. In this example the stages following the production of the esterified product take 5 hours. In the example the polycondensation product is reported to have an intrinsic viscosity of 1.05 dl/g. No solid state polymerization is conducted.

WO2014/054940 relates to a polyesters wherein the polyester comprises residues from a diol selected from the group of dimethylene isosorbide, dimethylene isomannide and dimethylene isoidide and may comprise 2,5-furandicarboxylic acid residues. The application teaches that solid state polymerization of a pre-polymer is usually carried out between the glass transition temperature (Tg) and the melting point (Tm) of the pre-polymer. It is evident that these polyesters are quite different from polyesters comprising ethylene-2,5-furandicarboxylate units. The application does show that the temperatures at solid state polymerization of these different polymers are below the melting points of the pre-polymers and are kept constant.

KR 20140003167 describes a polyester polymer with excellent transparency which is manufactured by using a biomass originated furandicarboxylate ester compound with ethylene glycol. In comparative examples also furandicarboxylic acid has been used. The molar ratio of furandicarboxylate ester to ethylene glycol may be from 1:1.1 to 1:4. The ratio of furandicarboxylic acid to ethylene glycol varies between1:1.2 to 1:2. The document does not disclose a solid state polymerization step.

It is apparent that it would be beneficial if the polymerization process could be altered such that a faster enhancement of the molecular weight of such polyesters could be obtained whilst particles of these polyesters would not stick. It has now surprisingly been found that when a semi-crystalline polyester is subjected to solid state polymerization whilst particles of such polyester are maintained at a specific temperature regime and are kept under a flow of an inert gas or in vacuum during a period, wherein the temperature is continuously or periodically increased, the solid state polymerization can be conducted at high temperatures without sticking of the particles, and subsequently, the molecular weight increase proceeds fast whilst maintaining free-flowing particles.

Accordingly, the present process provides a process for enhancing the molecular weight of a semi-crystalline polyester comprising ethylene 2,5-furandicarboxylate units, which process comprises heating the semi-crystalline polyester during a solid state polymerization period wherein the temperature is at least 180 °C and is kept below the melting point of the semi-crystalline polyester whilst the semi-crystalline polyester is either under a flow of inert gas or under vacuum to obtain a solid state polymerized polyester, wherein the temperature is continuously or periodically increased during the solid state polymerization period by 5 to 45 °C from a starting temperature in the range of 180 to 205 °C to a final temperature in the range of 210 to 225 °C either by increasing the temperature continuously during the solid state polymerization period at a rate of 1 to 8 °C/hr or by increasing the temperature periodically in a plurality of steps by 3 to 25 °C per step. 25 °C per step. It was found that by starting the solid state polymerization period at a temperature of at least 180 °C and increasing the temperature during the solid state polymerization period whilst ensuring that the temperature is below the melting temperature of the polyester, the melting temperature of the polyester increases, such that the temperature can be further increased. By keeping the polyester under a flow of inert gas or under vacuum the diffusion and removal of any volatile by-products that may be formed during the solid state polymerization are facilitated. Such by-products may include cyclic oligomers, e.g. a cyclic dimer of furan dicarboxylic acid and ethylene glycol. By removing these and other by-products, the post-condensation that takes place in the solid state polymerization period is benefited.

The polyester that is used in the present process is semi-crystalline. The crystallinity of a polymer tends to affect its physical properties, such as its density and melting temperature. Polymer crystallinity can be determined with Differential Scanning Calorimetry (DSC) by quantifying the heat associated with melting of the polymer. The heat can be reported as the percentage of crystallinity by normalizing the melting heat to that of a 100% crystalline sample. However, it is known in the art that the melting heat of a 100% crystalline sample is difficult to determine. Therefore, the crystallinity is often expressed as net enthalpy in terms of number of Joules per gram which number is derived from the DSC technique. The enthalpy of melting and crystallization can be determined in accordance with ISO 11357-3. The semi-crystalline polyester preferably has a crystallinity of at least 25 J/g, measured by DSC. A maximum enthalpy in terms of number of Joules per gram is typically 90 J/g. The semi-crystalline polyester having a certain degree of crystallinity then also has a melting point. The melting point of a polymer is easily determined by DSC and measured at the top of the endothermic peak. For the purpose of this invention the terms "melting point" and "Tm" refer to the temperature measured at the peak, in ISO-11357-3 referred to as the Tpm. When the DSC shows more than one peak, the melting point or Tm refers to the Tpm of the peak at the highest temperature. The ISO11357-3 standard describes such a melting point determination. In accordance with this determination, the polyester suitably has a melting point of at least 200 °C. For the measurements of the present invention, the DSC determination is conducted during the first heating cycle at a heating rate of 10°C/min. In highly crystalline polyester the melting point may exceed 230°C and may be as high as 245 °C. It is observed that during the present process the melting point and crystallinity of the polyester will increase. The melting point of the polyester is preferably at least 210 °C and may increase during the process such that at the end thereof it may exceed 220°C. The crystallinity will then preferably be greater than 40 J/g. The crystallinity will then advantageously be in the range of 40 to 90 J/g. Preferably, the temperature during the solid state polymerization period is kept at least 2°C, more preferably at least 5 °C below the melting point Tm. Provided that the temperature is at least 180 °C, the temperature during the solid state polymerization period may be as low as Tm-40 °C, preferably as low as Tm-20 °C.

The semi-crystalline polyester suitably consists of ethylene furandicarboxylate units for at least 95 mole%. The polyester may comprise other monomer units, such as other diols and diacids. Other suitable monomer diols include diethylene glycol and other suitable diacids, include terephthalic acid, adipic acid, phthalic acid and isophthalic acid. More preferably, the polyester consists of poly(ethylene 2,5-furandicarboxylate) that further comprises diethylene glycol residues, wherein the amount of diethylene glycol residues amounts to at most 0.045 moles of diethylene glycol residues per mole of 2,5-furandicarboxylate.

The semi-crystalline polyester is typically the product of the esterification of FDCA and ethylene glycol, followed by a polycondensation step. Alternatively, the polyester is the product of the transesterification of dialkyl furandicarboxylate, e.g. dimethyl furandicarboxylate, and ethylene glycol, followed by a polycondensation reaction. The polycondensation step generally is conducted under melt conditions. In accordance with the teaching of WO 2013/120989 the polycondensation may be carried out in two steps; a pre-polycondensation at reduced pressure and a subsequent polycondensation at a further reduced vacuum. The resulting polycondensate can be subjected to the solid state polymerization according to the present invention. Typically, the polycondensate produced under melt conditions is cooled. The polycondensate may then be shaped in the form of particles or pellets, e.g. by underwater pelletization or strand cutting. Such a polycondensate already has a certain relatively high molecular weight. If the polycondensate has an initial IV already greater than 1.0 dl/g, the principal purpose of such an additional step of solid state polymerization may be to achieve a reduction in volatiles, such as acetaldehyde, which can form during the melt polycondensation in addition to an additional molecular weight increase.

The molecular weight is expressed in terms of intrinsic viscosity. First the relative viscosity (11rei) is determined in a 60/40 w/w mixture of phenol and tetrachloroethane at 30 °C and a concentration (c) of 0.4 g/dl. This procedure is similar to the ASTM D4603 standard for the determination of the inherent viscosity for poly(ethylene terephthalate). The intrinsic viscosity is then calculated using the Billmeyer equation:

$$\text{Intrinsic viscosity (IV)}= \{\text{llrel} -1+3*1n(\text{rirel })\}/(4*c)$$

The intrinsic viscosity is suitably greater than 0.40 dl/g, preferably at least 0.45 dl/g and more preferably in the range of 0.45 to 1.0dl/g, wherein first the relative viscosity (11rei) is determined in a 60/40 w/w mixture of phenol and tetrachloroethane at 30 °C and a concentration (c) of 0.4 g/dl and the intrinsic viscosity is then calculated using the Billmeyer equation:

$$\text{Intrinsic viscosity (IV)}= \{\text{llrel} -1+3*1n(\text{rirel })\}/(4*c).$$

As the semi-crystalline polyester is to undergo an additional step of solid state polymerization the molecular weight is preferably in the range of 0.45 to 0.75 dl/g. Due to solid state polymerization the molecular weight is increased such as to 0.65 to 1.2 dl/g, preferably to an intrinsic viscosity of at least 0.75 dl/g, more preferably in the range of 0.75 dl/g to 1.0 dl/g.

Acetaldehyde may be formed during the melt polycondensation. Its content in polyesters can be determined using known methods. A suitable method is described in ASTM F 2013; this is described for polyethylene terephthalate, but can also be used for the polyester described in the present invention. Applicants have found that polycondensates can have acetaldehyde values of 18 mg/kg, or higher, prior to the additional steps of solid state polymerization as described herein. Applicants have also found that the solid state polymerization process described herein can reduce the levels of acetaldehyde to less than 1 mg/kg (ppm) and preferably to less than 0.5 mg/kg within a reasonably short reaction time.

As is taught in US 6569479 acetaldehyde is naturally formed during processing of any polyester containing ethylene glycol linkages. The compound is formed via a two-step reaction: the first step is cleavage of a polymer chain, generating a vinyl end group and a carboxylic acid end group. The second step is reaction of the vinyl end group with a hydroxyethyl end group, reforming the polymer chain and releasing acetaldehyde. When the polymer is used in a container for beverages, the acetaldehyde may migrate from the container sidewall into the beverage over time. During the lifetime of a typical container, several hundred ppb of acetaldehyde can migrate from the container sidewall into the beverage. For sensitive products, such as water, these levels of acetaldehyde are significantly above the taste threshold. In US 4340721 it is shown that when polyethylene terephthalate contains more than 1 ppm acetaldehyde, the polymer is unsuitable for use as material for beverage containers. Therefore there is a great desire to limit the amount of acetaldehyde in polyesters comprising ethylene furandicarboxylate units also to a level below 1 ppm (mg acetaldehyde per kg polyester).

If the polycondensate is semi-crystalline, i.e., has a certain degree of crystallinity, it can be used as such. However, it is preferred to subject it to a pre-treatment before it is being heated to obtain the solid state polymerized polyester. When the polycondensate is recovered as solid material after the polycondensation step usually in the form as pellets, particles or granules, the polycondensate may be substantially amorphous. In order to render the polycondensate into a more crystalline material, the semi-crystalline polyester is preferably obtained by crystallizing substantially amorphous polyester by keeping the substantially amorphous polyester at a temperature in the range of 90 to 180 °C, more preferably from 140 to 180 °C. Preferably, the polycondensate has been kept at 90 to 180 °C for a period of 1 to 48 hours. In certain arrangements the crystallization step or one of the crystallization steps, if the crystallization is carried out in more than one step, may entail controlling the temperature of the pellet during pelletization such that the final pellet temperature is in a range where crystallization occurs. This procedure is suitably carried out by cooling the molten polycondensate from above the melting temperature, i.e., keeping the temperature of the polycondensate in the desired temperature range of 90 to 180 °C. The outside of the pellets may be quenched by a very short exposure to a liquid, such as water, to reduce the propensity of the particles or pellets to adhere to each other at elevated temperatures. The exposure to the liquid can also be arranged to cool the pellets entirely to ambient temperature, after which the pellets are reheated to a temperature range of 90 to 180 °C, where crystallization occurs. For poly(ethylene 2,5-furandicarboxylate) it has been found that the most rapid crystallization occurs at approximately 150 to 170 °C. It has also been found that if the particles or pellets are held for a period in the order of hours at temperatures of 110 °C ± 30 °C the subsequent crystallization at 150 to 170 °C is faster. The optimal temperature program will depend on the particular arrangements used for the crystallization. For example, the polycondensate may be kept a temperature in the range of 80 to 140 °C for a period of 0.2 to 3 hrs, preferably 0.5 to 2.5 hrs, followed by a crystallization step for 1 to 48 hours at a temperature that is increased by 30 to 40 °C. The crystallization temperature may then be in the range of 120 to 180 °C. It has been found that the polyester chains in the polycondensate crystallize under these conditions yielding a desired semi-crystalline polyester. It has also been found that it can be advantageous to use a degree of agitation during the pre-treatment and crystallization period, to reduce the propensity of the particles or pellets to adhere to each other and cause clumping. Also, it has been found that a thermal pretreatment in water at 80 to 95 °C can also reduce the tendency of particles to adhere to each other during the subsequent crystallization in the range of 120 to 180°C. The reduction of adhesion during crystallization may be achieved by maintaining the cooled polycondensate at a temperature well below its Tm, e.g. from 90 to 180 °C, suitably from 90 to150 °C in an air or inert atmosphere. Alternatively, the cooled polycondensate may be treated with refluxing water, e.g. at a temperature of from 95 to 110 °C. Accordingly, there are several advantageous protocols to arrive at the desired crystallinity, all being completed by a crystallizing heating step at 120 to 180°C. One alternative is to subject the polycondensate to a heating step at 80 to 140 °C for a period of 0.2 to 3 hrs, followed by the crystallizing heating step. A second alternative is to conduct such heating step at 80 to 140 °C in a liquid below its boiling point, e.g. water. The melted polycondensate may also be pelletized while crystallizing by using e.g. an underwater pelletizer.

It was further found that the solid state polymerization procedure was facilitated by coating polycondensate particles with a powder of a solid that has a melting point of at least 200 °C. The solid material may be selected from a wide range of solids. The solid material is e.g. selected from inorganic materials, such as metal oxides or silica, which are inert in the solid state polymerization process and optionally in subsequent heat processing. Examples of suitable inorganic oxides are $Al_2O_3$, $ZrO_2$, MgO, $TiO_2$, $SiO_2$ and combinations thereof. It has been found that it is particularly effective if the solid material is an organic diacid. The diacid may be selected from a variety of organic carboxylic diacids, preferably from aromatic dicarboxylic acids. Such dicarboxylic acids include terephthalic acid and isophthalic acid. It is specifically preferred to use solid FDCA which has a melting point of about 342 °C. It was found that it is especially advantageous to provide polycondensate solid particles, such as pellets, with a coating of FDCA before or during the crystallization. The coating of FDCA prevented the solid particles from sticking during the subsequent solid state polymerization. The amount of FDCA to be used for such a coating may be selected in the range of 0.05 to 1.5 %wt based on the weight of the polycondensate, preferably in the range of 0.1 to 1.0 %wt.

It has been found that the polyester chains in the polycondensate crystallize under these conditions yielding a semi-crystalline polyester. The polyester thus obtained suitably has a crystallinity of at least 25 J/g, preferably at least 35 *Jig*, measured by DSC. It suitably has a melting point of at least 200 °C, preferably at least 215 °C.

The semi-crystalline polyester has an amount of carboxylic acid end groups. In accordance with the present invention the semi-crystalline polyester preferably has an amount of carboxylic end groups of 2 to 122 meq/kg as determined by using the titration method according to ASTM D7409, adapted for poly(ethylene 2,5-furandicarboxylate), involving the titration of a 4%w/v solution of poly(ethylene 2,5-furandicarboxylate) in ortho-cresol with 0.01M KOH in ethanol as titrant to its equivalence point, using 0.5 mg of bromocresol green (2,6-dibromo-4-[7-(3,5-dibromo-4-hydroxy-2-methyl-phenyl)-9,9-dioxo-8-oxa-9A6-thiabicyclo[4.3.0]nona-1,3,5-trien-7-yl]-3-methyl-phenol) in 0.1 ml ethanol as indicator. The amount of carboxylic end groups is more preferably in the range of 10 to 80 meq/kg. In addition the polyester also comprises hydroxyl end groups. The amount of hydroxyl end groups may vary widely. Preferably, the amount of hydroxyl end groups is in the range of 10 to 100 meq/kg.

In this context it is observed that during polycondensation some carboxylic groups may be split from the furan ring to which they were attached, leading to decarboxylated end groups.

In general there are a number of methods to determine the end groups in polyesters. Such methods include titration, infrared and nuclear magnetic resonance (NMR) methods. Often the separate methods are used to quantify the four main end groups: carboxylic acid end groups, hydroxyl end groups, methyl ester end groups and the end groups that are obtained after decarboxylation. However, in A.T. Jackson and D.F. Robertson have published an $^1$H-NMR method for end group determination in "Molecular Characterization and Analysis of Polymers" (J.M. Chalmers en R.J. Meier (eds.), Vol. 53 of "Comprehensive Analytical Chemistry", by B. Barcelo (ed.), (2008) Elsevier, on pages 171-203. In this method the hydroxyl end group is determined in polyethylene terephthalate (PET) by using a selection of harsh solvents such as 3-chlorophenol, 1,1,1,3,3,3-hexafluoro-2-propanol, trichloroacetic acid or trifluoroacetic acid. It is preferred to use deuterated 1,1,2,2-tetrachloroethane (TCE-d2) as solvent without any derivatization of the polyester. A similar method can be carried out for polyesters that comprise furandicarboxylate moieties and ethylene glycol residues. The measurement of the end groups for the latter polyesters can be performed at room temperature without an undue risk of precipitation of the polyester from the solution. This $^1$H-NMR method using TCE-d2 is very suitable to determine the hydroxyl end groups (HEG), the decarboxylation and the content of diethylene glycol (DEG) groups. Peak assignments are set using the TCE peak at a chemical shift of 6.04 ppm. The furan peak at a chemical shift of 7.28 ppm is integrated and the integral is set at 2.000 for the two protons on the furan ring. The HEG is determined from the two methylene protons of the hydroxyl end group at 4.0 ppm. The content of DEG is determined from the integral of the shifts at 3.82 to 3.92 ppm, representing four protons. The decarboxylated end groups (also known as furoic acid end groups) are found at a shift of 7.64-7.67 ppm, representing one proton. When the polyester also comprises methyl ester end groups, the methyl signal will occur at 3.97 ppm, representing 3 protons.

The carboxylic acid end groups are determined by using the titration method according to ASTM D7409, adapted for poly(ethylene 2,5-furandicarboxylate). A thus modified method thereof involves the titration of a 4%w/v solution of poly(ethylene 2,5-furandicarboxylate) in ortho-cresol with 0.01M KOH in ethanol as titrant to its equivalence point, using 0.5 mg of bromocresol green (2,6-dibromo-4-[7-(3,5-dibromo-4-hydroxy-2-methyl-phenyl)-9,9-dioxo-8-oxa-9A6-thiabicyclo[4.3.0]nona-1,3,5-trien-7-yl]-3-methyl-phenol) in 0.1 ml ethanol as indicator.

For the purpose of the present application the values for HEG and the decarboxylated end groups are obtained by $^1$H-NMR using TCE-d2, whereas the values for CEG are determined by the titration method described above.

The content of the various end groups can be expressed as relative to other end groups. It is also possible to express the amount of end groups as an absolute value per weight unit of polyester. Expressed as an absolute feature, the amount of carboxylic acid end groups in the semi-crystalline polyester is advantageously in the range of 25 to 80 meq/kg. The calculation of the absolute amount of carboxylic acid end groups is obtained directly from the titration.

About 10 mg of a polyester is weighed and put in an 8 ml glass vial. To the vial 0.7 ml of TCE-d2 is added and the polyester is dissolved at room temperature whilst agitating the mixture in the vial. The dissolved mixture is subjected to $^1$H-NMR, whilst the peak for TCE-d2 is set at 6.04 ppm. The furan peak is centered at 7.28 ppm, and it is integrated and the integral set to 2.000, to represent the 2 protons on the furan ring. The $^1$H-NMR signals are integrated and the amounts of end groups are calculated as follows:

$$\text{Hydroxyl end groups} \quad \textbf{(HEG)} \quad = 5494 * \text{integral at } 4.0 \text{ ppm}/2;$$

$$\text{Furoic acid end groups} \quad \textbf{(FAEG)} \quad = 5494 * \text{integral at } 7.65 \text{ ppm}.$$

When the polyester also comprises methyl ester end groups, the methyl signal will occur at 3.97 ppm and the content of the ester end groups is then calculated as:

$$\text{Ester end groups} \quad \textbf{(EEG)} \quad = 5494 * \text{integral at } 3.97 \text{ ppm}/3.$$

The results of these calculations are amounts of the respective end groups expressed in meq/kg. It is also possible to calculate a relative content of carboxylic acid end groups based on the sum of the carboxylic acid end groups and hydroxyl end groups. For that purpose, the following formula is used: CEG/(CEG + HEG).

The semi-crystalline polyester having an amount of hydroxyl end groups in addition to carboxylic acid end groups, preferably has a content of carboxylic acid end groups, expressed as the fraction of the molar amount of carboxylic acid end groups divided by the sum of the molar amounts of hydroxyl end groups and carboxylic acid end groups, in the range of 0.05 to 0.7. More preferably, the relative content of carboxylic acid end groups is in the range of 0.14 to 0.65 based on the sum of the hydroxyl and carboxylic acid end groups.

It may be advantageous to have a reduced level of carboxylic acid end groups in the final product after solid state polymerization. Applicants have found that while a high level of CEG is desired to achieve a high rate and extent of solid state polymerization, it may be desired to have a lower level in the solid state polymerized polyester. Thus, in preferred embodiments, the amount of CEG of the solid state polymerized polyester is less than 30 meq/kg and more preferably less than 20 meq/kg. Suitably the amount of CEG is in the range of 5 to 30 meq/kg, more preferably in the range of 7 to 20 meq/kg. It is also advantageous to have relatively few decarboxylated end groups, and in preferred embodiments the decarboxylated end group content is less than 15 meq/kg.

As indicated above, the process of the present invention also enables the obtaining of a solid state polymerized polyester that has a reduced acetaldehyde content. At the same time, the molecular weight has been enhanced. Preferably, the enhancement has led to a molecular weight corresponding to an intrinsic viscosity of at least 0.75 dl/g.

The semi-crystalline polyester is suitably prepared from a mixture of FDCA and ethylene glycol by esterification, followed by polycondensation, and optionally, by the crystallization treatment as described above. The esterification is preferably conducted from a starting mixture of FDCA and ethylene glycol, wherein the molar ratio of 2,5-furandicarboxylic acid to ethylene glycol is from 1:1.01 to 1:1.15. Alternatively, the semi-crystalline polyester is prepared from the transesterification of the dialkyl ester of FDCA, e.g. dimethyl-2,5-furandicarboxylate, and ethylene glycol, followed by polycondensation and, optionally, a crystallization treatment as described above.

The esterification reaction of furandicarboxylic acid and ethylene glycol is known in the art. Hence, the skilled person will realize that although there is no need for using an esterification catalyst, the use of such a catalyst may be contemplated. Hence in an embodiment, the 2,5-furandicarboxyic acid and ethylene glycol are suitably reacted in the presence of an esterification catalyst. However, since the esterification proceeds easily without the use of an esterification catalyst, the esterification is preferably carried out in the absence of an esterification catalyst, which is dedicated to the esterification reaction.

In the esterification reaction water is being formed. It has been found that it is advantageous to remove the water formed during the reaction of 2,5-furandicarboxylic acid and ethylene glycol. In this way the esterification reaction being an equilibrium reaction, may be led to completion. The removal of water from the esterification mixture may be conducted in any known manner. It is suitable to pass any water formed in a vaporous phase through a condenser and remove the condensate that includes the liquefied water. The vaporous phase may comprise also some ethylene glycol. Therefore, the vaporous phase is advantageously passed through a distillation system wherein water and ethylene glycol are separated. The ethylene glycol is suitably, at least partly, but preferably substantially completely, recycled to the esterification mixture. The water thus separated is discharged. Hence, the method according to the present invention is preferably carried out such that water is removed in a rectification system wherein any ethylene glycol that is removed with water is separated from water and at least partly recycled.

When the polyester is prepared from the transesterification of the dialkyl ester of FDCA a transesterification catalyst is suitably present. Examples of suitable transesterification catalysts that may be used include one or more of titanium(IV) alkoxides or titanium(IV) chelates, titanium carboxylates, mixtures of salts of calcium or magnesium or strontium or zinc, or a mixture of any of these salts. In the case of ethylene glycol containing polyesters, one or more of calcium or magnesium or strontium or zinc salts, such as calcium or zinc acetate, are particularly suitable. The catalysts are suitably used in an amount of about 0.005 mol% relative to initial dialkyl ester to about 0.2 mol% relative to initial dialkyl ester, more preferably in an amount of about 0.01 mol% of initial dialkyl ester to about 0.05 mol % of initial dialkyl ester. The alcohol, that is freed from the dialkyl ester, e.g. methanol, is suitably removed from the transesterification mixture.

The esterified or transesterified product thus obtained is suitably subjected to a pre-polycondensation step. Thereto, the pressure is reduced and, optionally, a polycondensation catalyst is added. The pre-polycondensation step is used to remove excess or unreacted ethylene glycol and to reduce the pressure to remove most of the other volatiles, while avoiding excessive foaming or carryover into the vacuum lines. The temperature is raised above the melting point of the ester and the polycondensation reaction begins to occur, with liberation and removal of ethylene glycol which is generated via the polycondensation reaction. In a continuous operation the pre-polycondensation reaction may be conducted in a dedicated vessel, typically with the overhead vapors being collected separately from the vapors generated during the esterification or transesterification stage. During this process stage the pressure is typically reduced from approximately 1 bar or more used during esterification down to about 20 to 700 mbar, and more preferably to about 20 to 100 mbar. The duration of the pre-polycondensation is suitably in the range of 0.5 to 2 hours.

Subsequently, the composition thus obtained is subjected to a step of polycondensation. As is known from the prior art the pressure at this step is further reduced. Pressures of less than about 5 mbar and preferably less than about 3 mbar may be applied. Lower pressures are preferred for good mass transfer and removal of ethylene glycol and water being liberated in the polycondensation and esterification reactions, respectively. Polycondensation temperatures according to the prior art include about 180 to 280°C. The polycondensation according to the invention is preferably carried out at a temperature of 245 to 270 °C and suitably at a pressure of 0.05 to 5 mbar. Under these conditions it is ensured that the ester composition as well as the polycondensate formed is in a molten stage. The polycondensation is suitably continued for a period ranging from 1 to 3 hours. Preferably, the combined period for the pre-polycondensation and the polycondensation stages is in the range of 1.5 to 4 hours.

The polycondensation may be terminated when the desired intrinsic viscosity has been reached. This can be monitored by measuring the torque of a stirrer that is provided in the reactor wherein the polycondensation is being carried out. It can also be monitored, for example, by a melt viscometer at the outlet of the reactor in a continuous process arrangement. When the viscosity is sufficiently high, the polycondensation is stopped and the product is discharged, yielding the polycondensate.

Many polycondensation catalysts may be used. Such catalysts include the catalysts comprising one or more elements selected from tin, zinc, titanium, antimony, calcium, manganese, cobalt, hafnium, lead, magnesium, aluminum, cerium, zirconium and mixtures thereof. These compounds may be the acetate or carbonate salts of these metals. Alternatively, metal alkoxides, alkyl metal compounds, or other organometallic compounds are also possible. Other suitable catalysts include the oxides and halides of the elements mentioned. Preferred catalysts include titanium alkoxides, antimony acetate, antimony oxide, and antimony glycolate, i.e. the reaction product of antimony oxide and ethylene glycol. The amounts of the polycondensation catalyst are typically in the range of 0.005 mol% to 0.2 mol%, based on the number of moles of 2,5-furandicarboxylic acid in the starting mixture, preferably in the range of 0.01 to 0.10 mol%.

When the temperature in the polycondensation step has been lowered to terminate the polycondensation, the polycondensate obtained will solidify. The polycondensate thus obtained is suitably subjected to the crystallization treatment as described above before it is used in the solid state polymerization according to the present invention.

Poly(ethylene 2,5-furandicarboxylate) is a slowly crystallizing polyester under quiescent conditions. Nucleating agents may be added to the polyester to increase the nucleation density, and thereby increase the overall crystallization rate under quiescent conditions. To this end it may be desirable to add a nucleating agent to the polyester after the polycondensation, typically still in the melt phase. Typical addition levels will be from 0.05 - 2 wt%, or more preferably 0.1 to 1 wt%, based on the total polyester. The inorganic minerals may be added at higher levels, such as up to 5 or even 10 wt% if desired.

Nucleating agents may include inorganic minerals, organic salts, high melting waxes, or other polymers. Examples of inorganic minerals include talc, titanium dioxide, fused silica, boron nitride, mica, and calcium carbonate. Some examples of the organic salts sodium stearate, zinc stearate, other stearate salts, salts of other fatty acids, FDCA disodium salt, sodium salt of saccharine, salts of benzoic acid, aromatic phosphonates, sulfonic acid ester salts of isophthalic acid, and commercial materials such as bis(4-propylbenzylidene) propyl sorbitol, available as Millad®NX88 from Milliken Chemicals, and 3,4-dimethylbenzylidene sorbitol, available as Millad®3988, phosphate salts and esters, available as NA-11, methylene-bis(4,6-di-t-butylphenyl)phosphate sodium salt, or NA-21, aluminium-hydroxy-bis[2,2"-methylene-bis(4,6-di-t-butyl-phenyl)-phosphate. High melting waxes include materials such as stearamides and erucamides, or bis-amides. Polymers can include materials such as ionomers e.g. Surlyn ionomers from Du Pont, or Aculyn ionomers from Rohm and Haas, PEG2000 (polyethylene glycol), PET, PBT or others.

After the cooling and crystallization step, the polyester is semi-crystalline and can be subjected to the solid state polymerization procedure according to the present invention. During the solid state polymerization period it is ensured that the temperature does not exceed the melting temperature of the polyester. Advantageously, the temperature during the solid state polymerization period is in the range of at most 40°C below the melting point of the polyester. Since it has been found that the crystallinity and the melting temperature increase during the solid state polymerization period, the preferred minimum temperature in the solid state polymerization period also increases.

The semi-crystalline polyester is heated in the solid state polymerization period at continuously increasing temperature, whilst ensuring that the temperature does not exceed the melting temperature of the polyester wherein the temperature is increased continuously at a rate of 1 to 8 °C per hour, or the temperature during the solid state polymerization period is increased in a plurality of steps by 3 to 25 °C per step. The skilled person will realize that the temperature increase should not be so big that the melting point of the polyester is exceeded. A manner to avoid that from happening is by keeping the temperature substantially constant per step, suitably for a period between 0.25 to 10 hours. The skilled person may also vary the number of steps in which the temperature is increased. Suitably the number of steps is in the range of 2 to 8.

The temperature of the crystallization step, if applied, is in the range of 90 to 180 °C. The pressure is typically atmospheric in an atmosphere of air although vacuum may also be used. During the solid state polymerization period the semi-crystalline polyester is heated whilst an inert gas is passed along the semi-crystalline polyester. Alternatively, the heating of the semi-crystalline polyester is then carried out in vacuum, e.g. whilst maintaining a pressure level of 0.001 to 0.2 mbar. The inert gas is suitably selected from nitrogen, helium, argon, neon, carbon dioxide and mixtures thereof. The inert gas suitably contains virtually no water vapor. Preferably, a flow of inert gas is applied as the use of a flow of inert gas typically favors a more effective removal of by-products than the use of vacuum. Especially cyclic oligomers, which can form white dust or particulates in a melt processed article or in tooling used for melt processing, may be removed more effectively by use of an inert gas flow.

The temperature difference between the steps in the case of periodical temperature increases or the rate with which the temperature is increased in case of continuously increased temperature may depend on the temperature at which the solid state polymerization period is started. Suitably, the temperature at which the solid state polymerization period starts is higher than the temperature at the crystallization step. Therefore, the temperature in the solid state polymerization step is preferably increased from a starting temperature in the range of 180 to 200 °C. The temperature increase during the solid state polymerization period may depend on the desired molecular weight.

EXAMPLE 1 NOT ACCORDING TO THE INVENTION

A poly(ethylene-2,5-furandicarboxylate) (PEF) polyester was prepared from a mixture of FDCA and monoethylene glycol (MEG) having a molar ratio of FDCA to MEG of 1 : 1.13. To the mixture 310 ppmw, based on FDCA, of antimony glycolate was added as catalyst. The mixture was esterified at a temperature of up to 210°C for about 4 hrs, whilst water was continuously removed. Then the pressure was brought down to 100 mbar and the temperature was increased to 260 °C to start a pre-polycondensation, which lasted for about 1 hour. Subsequently, the pressure was further reduced to 10 mbar and the temperature was maintained at about 260 °C so that the pre-polycondensate was subjected to further polycondensation. The polycondensation was continued for about 2 hrs. The polycondensate thus obtained was cooled to below its melting temperature and pelletized by strand cutting. The pellets consisted of amorphous PEF polyester having the following properties: intrinsic viscosity (IV): 0.58 dl/g; DEG content: 2.1 mol%; carboxylic end group (CEG) content: 29 meqlkg; hydroxyl end groups (HEG) content: 72 meqlkg; decarboxylated end groups, also known as furoic acid end groups (FAEG), content: 9 meqlkg; and crystallinity as determined by DSC: 0 *Jig*.

In a first step, the pellets were subjected to crystallization by heating at 150 °C for 1.5 hr under continuous agitation to obtain a semi-crystalline polymer. The semi-crystalline polymer showed a double melting endotherm with peaks at 160 and 205 °C, as determined by DSC in a first heating cycle at 10 °Clmin. The total melting enthalpy, as indication of the crystallinity was 38 *Jig*. The semi-crystalline polymer showed the same properties as to CEG content, HEG content, FAEG content and DEG content as the polycondensate above.

Four portions were taken out of the pellets. Portion 1 was heated under a flow of dry nitrogen at 190 °C for 0.5 hr. The IV of the resulting polymer was 0.60 dl/g. Subsequently, Portion 1 was retained at 190 °C under a nitrogen flow for another 24 hrs. The pellets remained free flowing.

Portion 2 was heated under a flow of dry nitrogen at 190 °C for 0.5 hr and thereafter at 201 °C for 0.5 hr. The IV of the resulting polymer was 0.60 dl/g. Subsequently, Portion 2 was retained at 201 °C under a nitrogen flow for another 24 hrs. The pellets remained free flowing.

Portion 3 was heated under a flow of dry nitrogen at 190 °C for 0.5 hr, thereafter at 201 °C for 0.5 hr, and thereafter at 205 °C for 0.5 hr. The IV of the resulting polymer was 0.62 dl/g. Subsequently, Portion 3 was retained at 205 °C under a nitrogen flow for another 24 hrs. The pellets remained free flowing.

Portion 4 was heated under a flow of dry nitrogen at 190 °C for 0.5 hr, thereafter at 201 °C for 0.5 hr, thereafter at 205 °C for 0.5 hr, and thereafter at 207 °C for 0.5 hr. At a heating rate of 1 °*Cl0.5* hr the temperature was increased to 210 °C and the polymer was kept at 210 °C for 0.5 hr. The IV of the resulting polymer was 0.66 dl/g. Subsequently, Portion 4 was retained at 210 °C under a nitrogen flow for another 24 hrs. The pellets remained free flowing.

Before Portion 4 was subjected to the heating step for 24 hrs at 210 °C the melting point of the polymer was determined by DSC and found as a single endotherm to be 215 °C. Its crystallinity determined as the total melting enthalpy was 43 *Jig*.

The IV of all Portions was determined after the heating step for 24 hrs. The results are shown in Table 1. Table 1 shows the solid state polymerization period ("SSP period"), the final IV and also the rate at which the IV increases in the final 24 hrs ("Rate increase").

Table 1

| Portion | SSP period | Final IV, dl/g | Rate increase, dl/g.hr |
|---------|------------|----------------|------------------------|
| 1 | 24.5 | 0.72 | 0.005 |
| 2 | 25.0 | 0.80 | 0.008 |
| 3 | 25.5 | 0.86 | 0.010 |
| 4 | 27.5 | 0.93 | 0.011 |

The results show that not only a higher IV, and thus molecular weight, can be obtained in the portions when the temperature during the solid state polymerization period is increased, but also that the rate at which the increase takes place is increased. The experiments are not according to the invention.

EXAMPLE 2 NOT ACCORDING TO THE INVENTION

A portion of the pellets consisting of amorphous PEF polyester of Example 1 was mixed with 0.5 %wt FDCA powder, based on the weight of the polyester. The pellets were heated under agitation at 150 °C for 1.5 hr. The resulting pellets contained semi-crystalline polyester having an IV of 0.58 dl/g, showing a double melting endotherm with peaks at 160 and 205 °C as determined by DSC in a first heating cycle at 10 °Clmin, and a crystallinity of 38 *Jig*. The pellets showed no agglomeration. Under a flow of dry nitrogen, the pellets were then subjected to heating at 207 °C of 0.5 hr and subsequent heating at 210 °C for 0.5 hr. The IV of the resulting polymer was 0.54 dl/g. Subsequently, the pellets were retained at 210 °C under a nitrogen flow for another 8.5 hrs, during which period the pellets remained free flowing, and did not show any sticking or agglomeration. After 8.5 hr of heating the IV was found to be 0.66, corresponding with a rate at which the IV increases in the final 8.5 hrs of 0.012 dl/g.

COMPARATIVE EXPERIMENT 1

A portion of the pellets consisting of amorphous PEF polyester of Example 1 was heated under agitation at 150 °C for 1.5 hr. The resulting pellets contained semi-crystalline polyester having an IV of 0.58 dl/g, showing a double melting endotherm with peaks at 160 and 205 °C as determined by DSC in a first heating cycle at 10 °C/min, and a crystallinity of 38 *Jig*. The pellets showed no agglomeration. Under a flow of dry nitrogen, the pellets were then subjected to heating at 207 °C of 0.5 hr and subsequent heating at 210 °C for 0.5 hr. After this time, the pellets were sticking to the wall of the reactor and contained large clumps of agglomerates and the process was stopped.

This result shows that if solid state polymerization is conducted in a single step, the resulting pellets are not free-flowing which results in blocking of the solid state polymerization process.

## Claims

1.  Process for enhancing the molecular weight of a semi-crystalline polyester comprising ethylene 2,5-furandicarboxylate units, which process comprises heating the semi-crystalline polyester during a solid state polymerization period wherein the temperature is at least 180 °C and is kept below the melting point of the semi-crystalline polyester whilst the semi-crystalline polyester is either under a flow of inert gas or under vacuum to obtain a solid state polymerized polyester,
    wherein the temperature is continuously or periodically increased during the solid state polymerization period by 5 to 45 °C from a starting temperature in the range of 180 to 205 °C to a final temperature in the range of 210 to 225 °C either by increasing the temperature continuously during the solid state polymerization period at a rate of 1 to 8 °C/hr or by increasing the temperature periodically in a plurality of steps by 3 to 25 °C per step.

2.  Process according to claim 1, wherein the semi-crystalline polyester has a melting point of at least 200 °C, as measured by Differential Scanning Calorimetry (DSC).

3.  Process according to claim 1 or 2, wherein the semi-crystalline polyester has an intrinsic viscosity of at least 0.45 dL/g, wherein first the relative viscosity ($\eta_{rel}$) is determined in a 60/40 w/w mixture of phenol and tetrachloroethane at 30 °C and a concentration (c) of 0.4 g/dL and the intrinsic viscosity is then calculated using the Billmeyer equation:

$$\text{Intrinsic viscosity (IV)} = \{\eta_{rel} -1+3*\ln(\eta_{rel})\}/(4*c).$$

4.  Process according to claim 3, wherein the semi-crystalline polyester has an intrinsic viscosity in the range of 0.45 to 0.75 dL/g.

5.  Process according to any one of claims 1 to 4, wherein the semi-crystalline polyester has an amount of carboxylic acid end groups of 2 to 122 meq/kg as determined by using the titration method according to ASTM D7409, adapted for poly(ethylene 2,5-furandicarboxylate), involving the titration of a 4%w/v solution of poly(ethylene 2,5-furandicarboxylate) in ortho-cresol with 0.01M KOH in ethanol as titrant to its equivalence point, using 0.5 mg of bromocresol green (2,6-dibromo-4-[7-(3,5-dibromo-4-hydroxy-2-methylphenyl)-9,9-dioxo-8-oxa-9A6-thiabicyclo[4.3.0]nona-1,3,5-trien-7-yl]-3-methyl-phenol) in 0.1 ml ethanol as indicator.

6.  Process according to any one of claims 1 to 5, wherein the semi-crystalline polyester has been obtained by crystallizing substantially amorphous polyester by keeping the substantially amorphous polyester at a temperature in the range of 90 to 180°C.

7.  Process according to claim 6, wherein the substantially amorphous polyester has been kept at a temperature in the range of 90 to 180°C for a period of 1 to 48 hr.

8.  Process according to claim 1, wherein the temperature is kept substantially constant per step for a period of from 0.25 to 10 hours.

9.  Process according to claim 1, wherein the number of steps is in the range of 2 to 8.

10. Process according to any one of claims 1 to 9, wherein the heating of the semi-crystalline polyester is conducted either whilst passing a dried inert gas along the semi-crystalline polyester or is carried out whilst maintaining a pressure level of about 0.001 to 0.2 bar.

## Patentansprüche

1.  Prozess zur Erhöhung des Molekulargewichts eines semi-kristallinen Polyesters umfassend Ethylen-2,5-furandicarboxylateinheiten, wobei der Prozess das Erhitzen des semi-kristallinen Polyesters während einer Festphasenpolymerisationsperiode umfasst, wobei die Temperatur mindestens 180 °C ist und unter dem Schmelzpunkt des semi-kristallinen Polyesters gehalten wird, während der semi-kristalline Polyester unter einem Fluss an Inertgas oder unter Vakuumgehalten gehalten wird um einen festphasenpolymerisierten Polyester zu erhalten, wobei die Temperatur konstant oder periodisch während der Festphasenpolymerisationsperiode um 5 bis 45 °C von einer Ausgangstemperatur im Bereich von 180 bis 205 °C auf eine Endtemperatur im Bereich von 210 bis 225 °C erhöht wird, entweder durch konstantes Erhöhen der Temperatur während der Festphasenpolymerisationsperiode mit einer Geschwindigkeit von 1 bis 8 °C/h oder durch periodisches Erhöhen der Temperatur in einer Vielzahl an Stufen um 3 bis 25 °C pro Stufe.

2. Prozess nach Anspruch 1, wobei der semi-kristalline Polyester einen Schmelzpunkt von mindestens 200 °C hat, gemessen durch dynamische Differenzkalometrie (DSC).

3. Prozess nach Anspruch 1 oder 2, wobei der semi-kristalline Polyester eine intrinsische Viskosität von mindestens 0,45 dL/g hat,
wobei zunächst die relative Viskosität ($\eta_{rel}$) in einer 60/40 w/w Mischung aus Phenol und Tetrachloroethan bei 30 °C und einer Konzentration von (c) = 0,4 g/dL gemessen wurde, und die intrinsische Viskosität anschließend über die Billmeyer-Gleichung errechnet wurde:

$$\text{Intrinsische Viskosität (IV)} = \{\eta_{rel} -1+3*ln(\eta_{rel})\}/(4*c).$$

4. Prozess nach Anspruch 3, wobei der semi-kristalline Polyester eine intrinsische Viskosität im Bereich von 0,45 dL/g bis 0,75 dL/g hat.

5. Prozess nach einem der Ansprüche 1 bis 4, wobei der semi-kristalline Polyester eine Menge an Carbonsäure-Endgruppen im Bereich von 2 bis 122 mEq/kg enthält, bestimmt durch die Titrationsmethode nach ASTM D7409, angepasst an Poly(ethylen 2,5-Furandicarboxylat), beinhaltend die Titration einer 4% w/v Lösung von Poly(ethylen 2,5-Furandicarboxylat) in Ortho-Kresol mit einer 0.01 M KOH Lösung in Ethanol als Titrant bis zum Equivalenzpunkt, wobei 0.5 mg Bromkresolgrün (2,6-Dibromo-4-[7-(3,5-dibromo-4-hydroxy-2-methyl-phenyl)-9,9-dioxo-8-oxa-9X6-thiabicyclo[4.3.0]nona-1,3,5-trien-7-yl]-3-methyl-phenol) in 0.1 mL Ethanol als Indikator verwendet wurde.

6. Prozess nach einem der Ansprüche 1 bis 5, wobei der semi-kristalline Polyester durch Kristallisation von im Wesentlichen amorphen Polyester erhalten wurde, indem der im Wesentlichen amorphe Polyester bei einer Temperatur im Bereich von 90 bis 180 °C gehalten wurde.

7. Prozess nach Anspruch 6, wobei der im Wesentlichen amorphe Polyester für eine Periode von 1 bis 48 h bei einer Temperatur im Bereich von 90 bis 180 °C gehalten wurde.

8. Prozess nach Anspruch 1, wobei die Temperatur pro Stufe für 0,25 bis 10 Stunden im Wesentlichen konstant gehalten wird.

9. Prozess nach Anspruch 1, wobei die Anzahl an Stufen im Bereich von 2 bis 8 liegt.

10. Prozess nach einem der Ansprüche 1 bis 9, wobei das Erhitzen des semi-kristallinen Polyesters entweder während der Passage eines trockenen Inertgases entlang des semi-kristallinen Polyesters, oder unter Aufrechterhaltung eines Druckniveaus von 0,001 bis 0,2 bar durchgeführt wird.

**Revendications**

1. Procédé pour augmenter le poids moléculaire d'un polyester semi-cristallin comprenant des unités d'éthylène 2,5-furandicarboxylate, lequel procédé comprend l'étape consistant à chauffer le polyester semi-cristallin pendant une période de polymérisation à l'état solide dans laquelle la température est d'au moins 180°C et est maintenue en dessous du point de fusion du polyester semi-cristallin tandis que le polyester semi-cristallin est soit sous un flux de gaz inerte soit sous vide pour obtenir un polyester polymérisé à l'état solide,
dans lequel la température est augmentée en continu ou périodiquement pendant la période de polymérisation à l'état solide de 5 à 45°C d'une température de départ dans la gamme de 180 à 205°C à une température finale dans la gamme de 210 à 225°C , soit en augmentant la température de manière continue pendant la période de polymérisation à l'état solide à une vitesse de 1 à 8°C/hr, soit en augmentant la température périodiquement en plusieurs étapes de 3 à 25°C par étape.

2. Procédé selon la revendication 1, dans lequel le polyester semi-cristallin a un point de fusion d'au moins 200°C, tel que mesuré par calorimétrie différentiel à balayage (DSC).

3. Procédé selon la revendication 1 ou 2, dans lequel le polyester semi-cristallin a une viscosité intrinsèque d'au moins 0,45 dL/g,
dans lequel la viscosité relative ($\eta_{rel}$) est d'abord déterminée dans un mélange de 60/40 p/p de phénol et de tétrachloroéthane à 30°C et une concentration (c) de 0.4 g/dL et la viscosité intrinsèque est ensuite calculée en utilisant l'équation de Billmeyer :

$$\text{Viscosité intrinsèque (IV)} = \{\eta_{rel}-1+3*\ln(\eta_{rel})\}/(4*c).$$

4. Procédé selon la revendication 3, dans lequel le polyester semi-cristallin a une viscosité intrinsèque dans la gamme de 0,45 à 0,75 dL/g.

5. Procédé selon l'une quelconque des revendications 1 à 4, dans lequel le polyester semi-cristallin a une quantité de groupes terminaux d'acide carboxylique de 2 à 122 meq/kg telle que déterminée par l'utilisation de la méthode de titration selon la norme ASTM D7409, adaptée pour le poly(éthylène 2,5- furandicarboxylate), impliquant la titration d'une solution de poly(éthylène 2,5-furandicarboxylate) à 4% p/v dans de l'ortho-crésol avec de l'hydroxyde de potassium à 0.01M dans de le l'éthanol titrant à son point d'équivalence, par utilisation de 0.5mg de vert de bromocrésol (2,6-dibromo-4-[7-(3,5-dibromo-4-hydroxy-2-méthyle-phényle)-9,9-dioxo-8-oxa-9À6-thiabicyclo [4.3.0]nona-1,3,5-trien-7-yl]-3-méthyle-phénol) dans 0.1 ml d'éthanol comme indicateur.

6. Procédé selon l'une quelconque des revendications 1 à 5, dans lequel le polyester semi-cristallin a été obtenu par cristallisation de polyester sensiblement amorphe en maintenant le polyester sensiblement amorphe à une température comprise entre 90 et 180°C.

7. Procédé selon la revendication 6, dans lequel le polyester sensiblement amorphe a été maintenu à une température comprise entre 90 et 180°C pendant une période de 1 à 48 heures.

8. Procédé selon la revendication 1, dans lequel la température est maintenue sensiblement constante par étape pendant une période de 0,25 à 10 heures.

9. Procédé selon la revendication 1, dans lequel le nombre d'étapes est compris entre 2 et 8.

10. Procédé selon l'une quelconque des revendications 1 à 9, dans lequel le chauffage du polyester semi-cristallin est réalisé soit en faisant passer un gaz inerte sec le long du polyester semi-cristallin, soit en maintenant un niveau de pression d'environ 0,001 à 0,2 bar.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2010132740 A
- WO 2011043660 A
- WO 2011043661 A
- US 2551731 A
- US 20090124763 A
- WO 2013062408 A
- WO 2010077133 A
- WO 2013120989 A
- WO 2014054940 A
- KR 20140003167
- US 6569479 B
- US 4340721 A

### Non-patent literature cited in the description

- Molecular Characterization and Analysis of Polymers. Comprehensive Analytical Chemistry. Elsevier, 2008, vol. 53, 171-203